# EUROPEAN PATENT APPLICATION

(11) **EP 2 750 013 A2**
(43) Date of publication of application: **02.07.2014**
(21) Application number: 13199446.9
(22) Date of filing: 23.12.2013
(51) Int. Cl.: G06F 3/0482, H04N 5/445

(54) **Display apparatus and method for controlling display apparatus thereof**

(30) Priority: 27.12.2012 KR 20120155200
(71) Applicant: Samsung Electronics Co., Ltd, Gyeonggi-do 443-742 (KR)
(72) Inventor: Um, Soo-hyun, Gyeonggi-do (KR); Kim, Tae-hong, Busan (KR); Noh, Byoung-yoon, Seoul (KR)
(74) Representative: Robinson, Ian Michael

(57) **Abstract**

A display apparatus and a method for controlling a display apparatus thereof are provided. The method of controlling a display apparatus includes displaying a first image on a display screen, in response to a command to generate a menu, generating a menu including one or more items for changing an image setting and displaying the menu on the display screen, and in response to one of the one or more items included in the menu being selected, displaying a plurality of images which are generated by applying different image setting values to the first image on a plurality of areas of the display screen. Accordingly, a user may check the change of the display screen due the change of an image setting intuitively.

## Description

### CROSS-REFERENCE TO RELATED APPLICATION

This application claims priority from Korean Patent Application No. 10-2012-0155200, filed in the Korean Intellectual Property Office on December 27, 2012, the disclosure of which is incorporated herein by reference in its entirety.

### BACKGROUND

### 1. Field

Apparatuses and methods consistent with exemplary embodiments relate to a display apparatus and a method for controlling a display apparatus thereof, and more particularly, to a display apparatus which is capable of dividing a display screen into a plurality of areas and displaying a plurality of images on each of the plurality of the divided areas, and a method for controlling a display apparatus thereof.

### 2. Description of the Related Art

A display apparatus may change a setting value of an image displayed on a display screen. For example, a display apparatus may change a setting value to correspond to an image mode (for example, a movie mode a standard mode, and so on) which is selected by a user input, or change an image setting value of a setting item such as brightness, contrast, etc., by a user input.

In particular, when an image setting value regarding a currently-displayed image is changed, the related art display apparatus displays only an image where the changed setting value is applied.

However, if a user is allowed to view only the image where the changed image setting value is applied, it is difficult for user to know how the previous image has been changed intuitively. In addition, if the image setting value is changed minutely, if is difficult to recognize the difference between the previously-displayed image and the image where the changed image setting value is applied.

### SUMMARY

One or more exemplary embodiments provide a display apparatus which may divide a display screen into a plurality of areas so as to allow a user to compare the previously-displayed image and the image where the changed image setting value is applied and display a plurality of images where different image setting values are applied on each of the plurality of areas, and a method for controlling a display apparatus thereof.

According to an aspect of an exemplary embodiment, there is provided a method for controlling a display apparatus, the method including displaying a first image on a display screen, in response to a command to generate a menu, generating a menu including one or more items for changing an image setting and displaying the menu on the display screen, and , in response to one of the one or more items included in the menu being selected, displaying a plurality of images that are generated by applying different image setting values to the first image on a plurality of areas of the display screen.

The displaying may include, in response to an item to change an image mode being selected from among the one or more items included in the menu, dividing the display screen into the plurality of areas corresponding to a number of image modes, and displaying the plurality of images which are generated by applying different image modes to the first image on each of the plurality of areas.

Each of the plurality of areas may include information indicating an image mode being applied to an image displayed on a corresponding area.

The displaying the plurality of images may include, in response to an image setting item for improving image quality being selected from among the one or more items included in the menu, dividing the display screen into two areas and displaying the first image in one of the areas and a second image in the other one of the areas, the second image being generated by applying the image quality improvement function to the first image.

The displaying the plurality of images may include a displaying description regarding the image quality improvement function on the display screen.

The displaying the plurality of images may include, in response to an image setting item for changing an image setting value being selected from among the one or more items included in the menu, dividing the display screen into two areas and displaying the first image in one of the areas and a third image in the other one of the areas, the third image being generated by applying a target image setting value to the first image, and in response to an image setting value being changed by a user input, displaying an image by applying the changed image setting value to the third image.

The displaying the plurality of images may include displaying an image setting value applied to the first image around the first image and displaying an image setting value applied to the third image around the third image.

The method may further include, in response to one of the plurality of areas being selected by a user input, magnifying an image displayed on the selected area and displaying the magnified image on the display screen.

According to an aspect of another exemplary embodiment, there is provided a display apparatus including an image input unit which is configured to receive an image, an image processor which is configured to process the input image, a display which is configured to display a first image, the first image being image-processed by the image processor, an input unit which is configured to receive a user command, and a controller which is configured to , in response to a command to generate a menu for changing an image setting being input through the input unit, controls the image processor to generate a menu including one or more items for changing an image setting on the display and control the display to display the menu including the one or more items, and in response to one of the one or more items included in the menu being selected through the input unit, to display a plurality of images which are generated by applying different image setting values on a plurality of areas of the display.

In response to an item to change an image mode being selected from among the one or more items included in the menu, the controller may control the image processor and the display to divide the display screen into a plurality of areas corresponding to a number of image modes and display a plurality of images which are generated by applying different image modes to the first image on each of the plurality of areas.

The controller may control the display to display information indicating an image mode applied to an image displayed on a corresponding area of each of the plurality of areas.

The controller, in response to an image setting item for improving image quality being selected from among the one or more items included in the menu, may control the image processor and the display to divide the display screen into two areas and display the first image in one of the areas and a second image in the other one of the areas, the second image being generated by applying the image quality improvement function to the first image.

The controller may control the display to display a description regarding the image quality improvement function on the display screen.

The controller, in response to an image setting item for changing an image setting value being selected from among the one or more items included in the menu, may control the image processor and the display to divide the display screen into two areas and display the first image in one of the areas and a third image in the other one of the areas, the third image being generated by applying a target image setting value to the first image, and in response to an image setting value being changed through the input unit, display an image by applying the changed image setting value to the third image.

The controller may control the display to display an image setting value applied to the first image around the first image and display an image setting value applied to the third image around the third image.

The controller, in response to one of the plurality of areas being selected through the input unit, may control the display to magnify an image displayed on the selected area and display the magnified image on the display screen.

### BRIEF DESCRIPTION OF THE DRAWINGS

The above and/or other aspects will be more apparent by describing certain exemplary embodiments with reference to the accompanying drawings, in which:
FIG. 1 is a block diagram illustrating configuration of a display apparatus briefly according to an exemplary embodiment;
FIG. 2 is a block diagram illustrating configuration of a display apparatus in detail according to an exemplary embodiment;
FIGS. 3 to 8 are views illustrating exemplary embodiments of displaying a plurality of images where a plurality of image setting values are applied on a screen in order to change image settings according to various exemplary embodiments;
FIG. 9 is a flowchart provided to explain a method for controlling a display apparatus according to an exemplary embodiment.

### DETAILED DESCRIPTION

Certain exemplary embodiments are described in higher detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

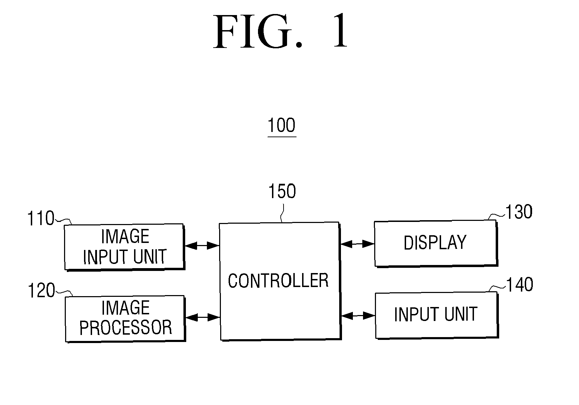

FIG. 1 is a block diagram illustrating a configuration of a display apparatus briefly according to an exemplary embodiment. As illustrated in FIG. 1, the display apparatus 100 includes an image input unit 110, an image processor 120, a display 130, an input unit 140, and a controller 150. In this case, the display apparatus 100 may be a smart television, but this is only an example and this disclosure is not limited thereto. The display apparatus 100 may be realized as various display apparatuses such as tablet PC, a smart phone, a projection television, and so on. The display apparatus 100 according to an exemplary embodiment may be a display apparatus capable of outputting an image having Ultra High Definition (UHD)-level resolution (7680X4320).

The image input unit 110 may receive image data from a plurality of sources. Specifically, the image input unit 110 may receive broadcast data from an external broadcasting station, image data from an external apparatus (for example, a set-top box, a digital versatile disk (DVD) player, a Blu-ray disc (BD) player, etc.) and Internet web page data via a network.

The image processor 120 performs signal-processing so that an image input through the image input unit 110 can be displayed by the display 130. Specifically, the image processor 120 may perform signal-processing such as video decoding, format analysis, video scaling, etc. and operations such as adding GUI, etc. with respect to a 3D image input to the image input unit 110.

In particular, the image processor 120 according to an exemplary embodiment may be realized as a plurality of image processing modules in order to display a plurality of images on each of a plurality of areas of a display screen.

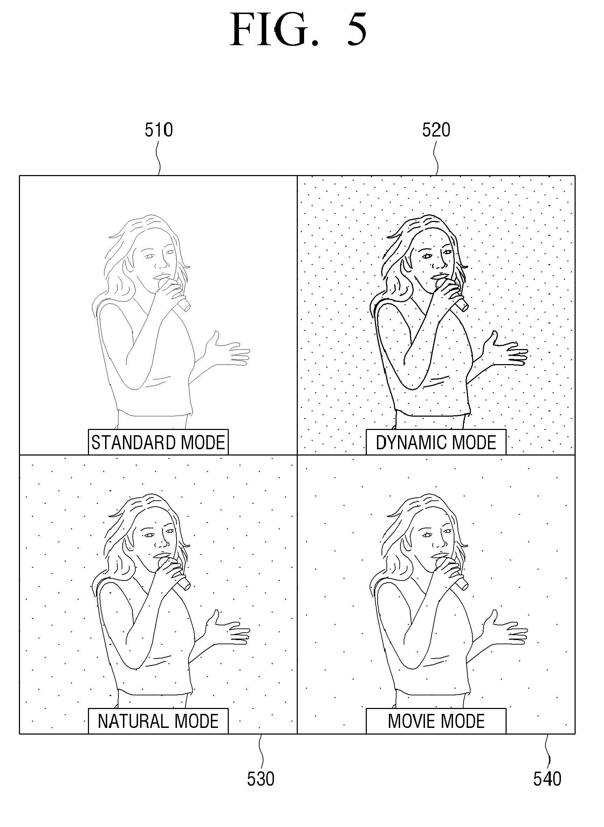

The display 130 displays image data which is image-processed by the image processor 120. In this case, the display 130 may be divided into a plurality of areas and display a plurality of image data on each of the plurality of areas simultaneously. For example, as shown in FIG. 5 and discussed in further detail below, the display 130 may divide a display screen into four areas and display the first to the fourth images on each of the four areas respectively.

The input unit 140 receives a user command to control the display apparatus 100. In particular, the input unit 140 may receive a command to generate a menu for changing an image setting. In addition, the input unit 140 may receive a user command to select one of a plurality of items includes in a menu for changing an image setting.

The input unit 140 according to an exemplary embodiment may be realized as a remote controller, but this is only an example and the present disclosure is not limited thereto. For example, the input unit 140 may also be realized as various other input apparatuses such as a touch screen, a mouse, a pointing device, and so on.

The controller 150 controls the overall functions of the display apparatus 100 according to a user command input to the input unit 140. In particular, if a command to generate a menu for changing an image setting is input through the input unit 140 while a first image is being displayed on the display 110, the controller 150 generates a menu including one or more items for changing an image setting and displays the same on the display 130. If one of the one or more items included in the menu for changing an image setting is selected through the input unit 140, the controller 150 controls the image processor 120 and the display 130 to display a plurality of images where different image setting values are applied to the first image on each of the plurality of areas.

Specifically, if an image mode change item from among one or more items included in the menu for changing an image setting is selected through the input unit 140, the controller 150 may control the image processor 120 and the display 130 to divide the display 110 into a plurality of areas such that the number of the areas corresponds to the number of image modes and to display a plurality of images where different image setting values are applied to the first image on each of the plurality of areas. For example, if there are four image modes (for example, standard mode, natural mode, dynamic mode, and movie mode), the controller 150 may control the image processor 120 and the display 130 to divide the display 130 into four areas and display four screens where four image modes are applied to the first image on each of the four areas. In this case, the controller 150 may control the display 130 to display information regarding the image modes which are applied to the image displayed on each of the plurality of areas.

Further, if an image setting item for improving image quality is selected from among one or more items included in the menu for changing an image setting is selected through the input unit 140, the controller 150 may control the image processor 120 and the display 130 to divide the display into two areas and to display the first image and a second image, which is generated by applying the function of improving image quality to the first image, on each of the two areas. For example, if an image quality improvement function such as an outline reinforcement function or a motion lighting function is selected, the controller 150 may divide the display 110 into two areas and display the first image where the image quality improvement function is not applied in one of the areas and the second image where the image quality improvement function is applied in the other one of the areas. In this case, the controller 150 may control the display 130 to additionally display a description regarding the image quality improvement function on the display 130.

Alternatively, if an image setting item, which is for changing an image setting value, is selected through the input unit 140 from among one or more items included in the menu for changing image settings, the controller 150 may control the display 130 to divide the display 130 into two areas and display the first image in one of the areas and a third image, which is generated by applying a target image setting value to the first image, in the other one of the areas. When the image setting value is changed through the input unit 140, the controller 150 may control the image processor 120 and the display 130 to apply the target image setting value to the third image and display the changed third image. For example, if an image setting item for changing an image setting value such as a brightness setting item, a contrast ratio setting item, etc. is selected through the input unit 140, the controller 150 may divide the display 130 into two areas and display the first image, which has been displayed, in one of the areas and the third image where the new setting value will be applied in the other one of the areas. In this case, the controller 150 may control the display 130 to display an image setting value applied to the first image around the first image and an image setting value input to the third by a user around the third image.

In addition, if one of a plurality of areas is selected through the input unit 140, the controller 150 may control the display 130 to magnify an image displayed on the selected area and display the magnified image on the display screen. For example, when four images where four image modes are applied are displayed on four areas respectively and one of the four areas is selected, the controller 150 may control the image processor 120 and the display 130 to magnify the image displayed on the selected area where a specific image mode is applied and display the magnified image.

As described above, the display apparatus 100 allows a user to compare a previously-displayed image with an image where a new image setting value is applied on one screen so that the user may recognize the change of the display screen due to the change of the image setting intuitively.

In the above exemplary embodiment, a display screen is divided into a plurality of areas after an item is selected, but this is only an example and this disclosure is not limited thereto. For example, the display screen may be divided before an item is selected.

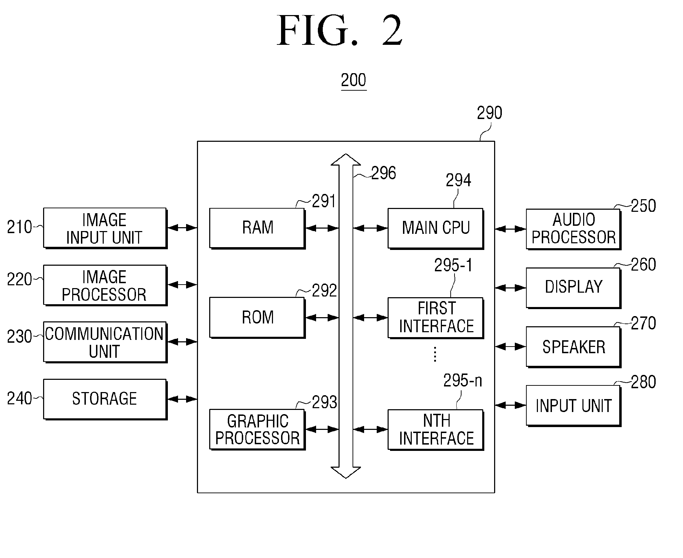

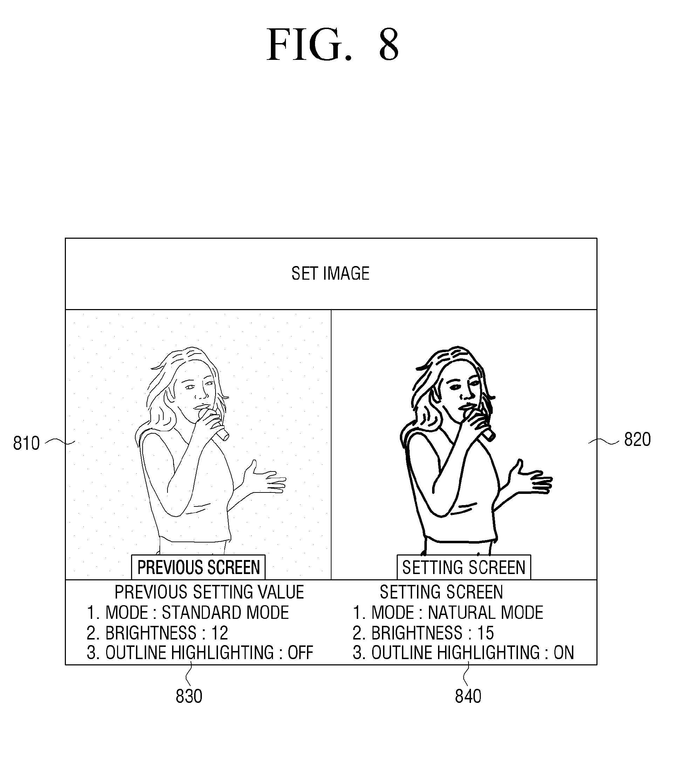

Hereinafter, an exemplary embodiment will be described in greater detail with reference to FIGS. 2 to 8. FIG. 2 is a view illustrating configuration of a display apparatus 200 in detail according to an exemplary embodiment. As illustrated in FIG. 2, the display apparatus 200 comprises an image input unit 210, an image processor 220, a communication unit 230, a storage 240, an audio processor 250, a display 260, a speaker 270, an input unit 280, and a controller 290.

FIG. 2 is a view illustrating each component comprehensively by taking a case where the display apparatus 200 is an apparatus providing various functions such as communication function, broadcast reception function, video reproduction function, and display function as an example. Therefore, some of the components illustrated in FIG. 2 may be omitted or changed, or other components may be added, depending on exemplary embodiments.

The image input unit 210 may receive image data through various sources. Specifically, the image input unit 210 may receive broadcast data from an external broadcasting station, and image data from an external apparatus (for example, a set-top box, a DVD apparatus, a BD apparatus, USB apparatus, etc.). In addition, the image input unit 210 may receive web page image data via external network.

The image processor 220 is a component which processes image data received from the image input unit 210. The image processor 220 may perform various image processing such as decoding, scaling, noise filtering, frame rate conversion, resolution conversion, etc. with respect to image data. Meanwhile, the image processor 220 according to an exemplary embodiment may include a plurality of image processing modules in order to display a plurality of images on the display 260 simultaneously.

The communication unit 230 is a component to perform communication with various types of external apparatuses according to various types of communication methods. The communication unit 230 may comprise one or more various communication chips such as a WiFi chip, a Bluetooth chip, a Near Field Communication (NFC) chip, a wireless communication chip, and so on. In this case, the WiFi chip, the Bluetooth chip, and the NFC chip perform communication according to a WiFi method, a Bluetooth method, and an NFC method respectively. The NFC chip refers to a chip which operates according to an NFC method by using 13.56MHz from among various RF-ID frequency bands such as 135kHz, 13.56MHz, 433MHz, 860∼960MHz, 2.45GHz, and so on. When the WiFi chip or the Bluetooth chip is used, various connection information such as SSID, session key, etc. is received/transmitted in advance so that communication can be performed using the same and various information can be received/transmitted. The wireless communication chip refers to a chip which performs communication according to various communication standards such as IEEE, Zigbee, 3G (3rd Generation), 3GPP (3rd Generation Partnership Project), LTE (Long Term Evolution), and so on.

The storage 240 stores various modules to drive the display apparatus 200. For example, the storage 240 may store software including base module, sensing module, communication module, presentation module, web browser module, and service module. In this case, the base module is a basic module which processes a signal transmitted from each hardware included in the display apparatus 200 and transmits the processed signal to an upper layer module. The sensing module collects information from various sensors, and analyzes and manages the collected information, and may include a face recognition module, a voice recognition module, a motion recognition module, an NFC recognition module, and so on. The presentation module is a module to compose a display screen, and may include a multimedia module to reproduce and output multimedia contents and a UI rendering module to perform UI and graphic processing. The communication module is a module to perform communication with outside. The web browser module is a module to access a web server by performing web browsing. The service module is a module including various applications to provide various services.

As described above, the storage 240 may include various program modules, but some of the various program modules may be omitted, changed, or added according to the type and characteristics of the display apparatus 200. For example, if the display apparatus 200 is realized as a tablet PC, the basic module may further include a determination module to determine a GPS-based location, and the sensing module may further include a sensing module to sense the operation of a user.

The audio processor 250 is a component which performs processing with respect to audio data. The audio processor 250 may perform various processing such as decoding, amplifying, noise filtering, etc. with respect to audio data. The audio data processed by the audio processor 250 may be output to the speaker 270.

The display 260 displays at least one of a video frame, which is generated as the image processor 220 processes image data received from the image input unit 210, and various screens, which are generated by a graphic processor 293. In particular, the display 260 may divide a display screen into a plurality of areas and display a plurality of images where different image setting values are applied with respect to the same image data on each of the plurality of areas.

The speaker 270 is a component that outputs not only various audio data processed by the audio processor 250 but also various alarm sounds and voice messages.

The input unit 280 receives a user command to control overall operations of the display apparatus 200.

In particular, the input unit 280 may receive a user manipulation to move a highlight located one of a plurality of items. Specifically, the input unit 280 may receive a command to generate a menu for changing an image setting, a user command to select one of a plurality of items included in a menu for changing an image setting, and a user command to change an image setting value.

In this case, the input unit 280 may be realized as a remote controller including a plurality of buttons (for example, a button for generating a menu, a button for moving left, right, up, or down, a button for selection, and so on), but a remote controller is only an example and the present disclosure is not limited thereto. The input unit 280 may also be realized as other input apparatuses capable of controlling the display apparatus 200, such as a touch panel, a pointing device, and so on.

The controller 290 controls the overall operations of the display apparatus 200 using various programs stored in the storage 240.

As illustrated in FIG. 2, the controller 290 comprises a RAM 291, a ROM 292, a graphic processor 293, a main CPU 294, first to nth interface 295-1 - 295-n, and a bus 296. In this case, the RAM 291, the ROM 292, the graphic processor 293, the main CPU 294, and the first to nth interface 295-1 - 295-n may be connected to each other through the bus 296.

The ROM 292 stores a set of commands for system booting. If a turn-on command is input and thus, power is supplied, the main CPU 294 copies an O/S stored in the storage 240 in the RAM 291 according to a command stored in the ROM 292 and executes the O/S to boot the system. Once the system booting is completed, the main CPU 294 copies various application programs stored in the storage 240 in the RAM 291 and performs various operations by executing the application programs copied in the RAM 291.

The graphic processor 293 generates a screen including various objects such as icon, image, text, etc. using an operator (not shown) and a renderer (not shown). The operator calculates property values such as coordinates, shape, size, color, etc. of a screen where each object is displayed according to a layout of a screen using a control command received from the user command input unit 280. The renderer generates a screen of various layouts including an object based on the property values calculated by the operator. The screen generated by the renderer is displayed within a display area of the display 210.

The main CPU 294 performs booting using the O/S stored in the storage 240 by accessing the storage 240. In addition, the main CPU 294 performs various operations using various programs, contents, data, and etc. stored in the storage 240.

The first to nth interface 295-1 to 295-n is connected to the above-described various components. One of the interfaces may be network interface that is connected to an external apparatus through the network.

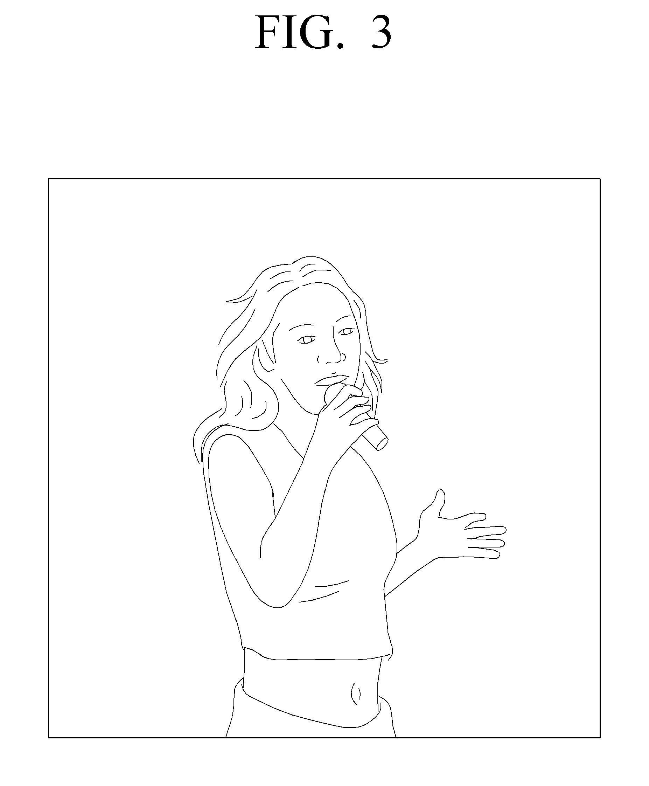

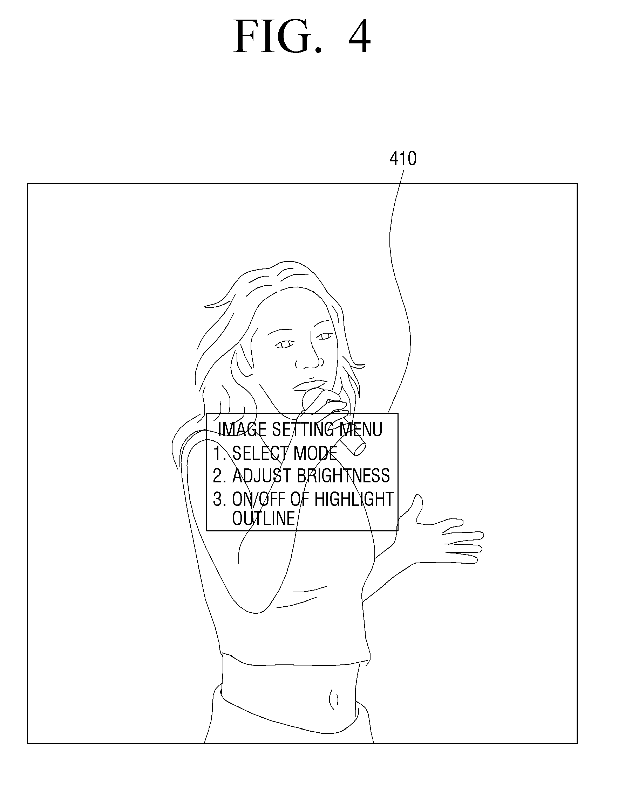

In particular, when a command to generate a menu for changing an image setting is input through the input unit 280 while the first image is being displayed, the controller 290 may control the display 260 to generate a menu including at least one item for changing an image setting and display the menu. For example, as illustrated in FIG. 3, when a command to generate a menu for changing an image setting (for example, a command to select a button for generating a menu on a remote controller) is input through the input unit 280 while the first image is being displayed on the display 260, the controller 290 may control the display 260 to generate and display a menu 410 including one or more items for changing an image setting as illustrated in FIG. 4.

Subsequently, when one of the one or more items for changing an image setting included in the menu 410 is selected through the input unit 280, the controller 290 may control the image processor 220 and the display 260 to divide the display 260 into a plurality of areas and display a plurality of images where different image setting values are applied to the first image on each of the plurality of areas.

Specifically, if an item for changing an image mode is selected from among one or more items included in the menu, the controller 290 may control the image processor 220 and the display 260 to divide the display 260 into a plurality of areas of which number corresponds to the number of image modes and display a plurality of images which generated by applying the different image modes to the first image on each of the plurality of areas. For example, as illustrated in FIG. 4, if an image for selecting an image mode is selected while the menu 410 for changing an image setting is being displayed, the controller 290 may control the image processor 220 and the display 260 to divide the display 260 into four areas and display a plurality of images 510, 520, 530, 540 where four image modes are applied with respect to the first image on each of the four areas as illustrated in FIG. 5.

In this case, the controller 290 may display information regarding image modes which are applied to the images displayed on each of the plurality of areas. For example, the controller 290 may indicate that the image mode applied to an image 510 displayed on the first area is a standard mode, the image mode applied to an image 520 displayed on the second area is a dynamic mode, the image mode applied to an image 530 displayed on the third area is a natural mode, and the image mode applied to an image 540 displayed on the fourth area is a movie mode as illustrated in FIG. 5.

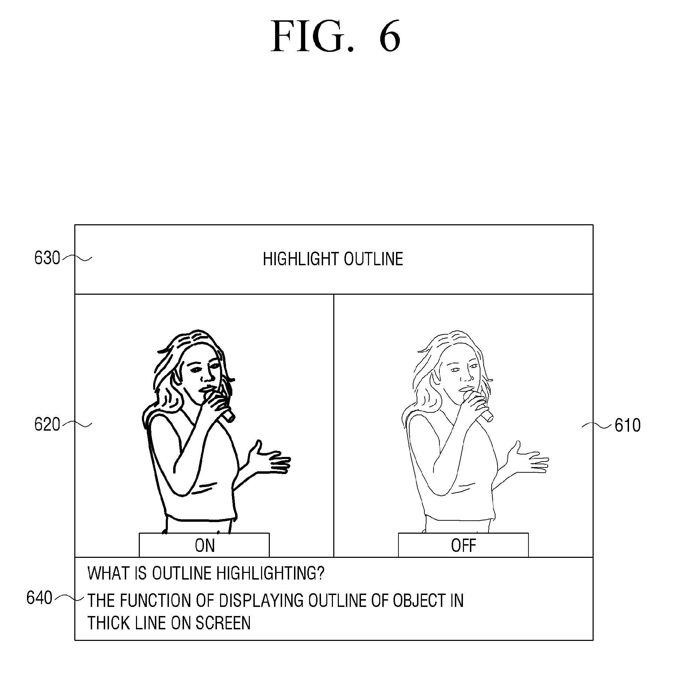

In addition, if an image setting item for improving image quality is selected from among one or more items included in the menu 410 for changing an image setting, the controller 290 may control the image processor 220 and the display 260 to divide the display into two areas and display the first image, which is the previously-displayed image, in one of the areas and the second image, which is generated by applying the image quality improvement function to the first image, in the other one of the areas. For example, as illustrated in FIG. 4, the third item in the menu 410 is turns a highlight outline, which is a function of displaying an outline of an object with a thick line on the display screen, on and off. If this item for highlighting an outline is selected while the menu 410 for changing an image setting is displayed, the controller 290 may control the image processor 220 and the display 260 to divide the display 260 into two areas and display an image 610, which is a previously-displayed image, in one of the areas and an image 620 where the outline highlighting function is applied in the other one of the areas as illustrated in FIG. 6.

In this case, the controller 290 may also display a description 630 regarding the image quality improvement function on the display screen. For example, as illustrated in FIG. 6, the controller 290 may also display the description 630 of "Highlight Outline" as an image quality improvement function. Similarly, the controller 290 may also display a definition 640 regarding the image quality improvement function on the display screen. For example, as illustrated in FIG. 6, the controller may also display the definition of the description 630 as an image quality improvement function.

In the above exemplary embodiment, the outline highlighting function has been described as an image quality improvement function, but this is only an example. The above-mentioned technical concepts may also be applied to other image quality improvement functions which can be turned on/off (for example, a motion lighting function).

In addition, if an image setting item for changing an image setting value is selected from among one or more items included in the menu 410 for changing an image setting, the controller 290 may control the image processor 220 and the display 260 to divide the display 260 into two areas and display the first image, which is a previously-displayed image, in one of the areas and the third image, which is generated by applying a target image setting value to the first image, in the other one of the areas. If an image setting value is changed by a user input through the input unit 280, the controller 290 may control the image processor 220 and the display 260 to apply the changed image setting value to the third image and display the same. For example, as illustrated in FIG. 4, if an item to adjust brightness is selected while the menu 410 for changing an image setting is displayed, the controller 290 may control the image processor 220 and the display 260 to divide the display 260 into two areas and display an image 710, which is a previously-displayed image, in one of the areas and the image 720 having a brightness value that is changed by the user in the other one of the areas. In this case, if the brightness value is adjusted by a user input (for example, an input of up/down button on a remote controller) through the input unit 280, the controller 260 may change the brightness value of the right image 720 to the brightness value adjusted by the user input.

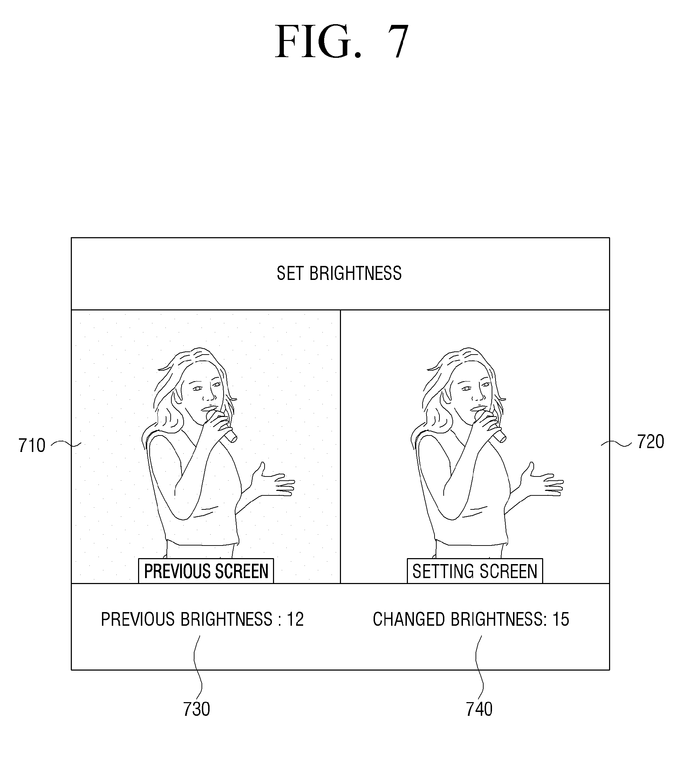

In this case, in order for a user to compare the previously-applied image setting value with the newly-applied setting value, the controller 290 may control the display 260 to display the image setting value 730 applied to the first image around the first image 710 and display the image setting value 740 applied to the third image 720 around the third image 720. For example, as illustrated in FIG. 7, the controller 290 may control the display 260 to display brightness information ("12") applied to the previous image below a left image 710 and display the brightness information ("15") to be applied newly below a right image 720.

Further, if one of a plurality of areas is selected through the input unit 280 while a plurality of images which are generated by applying different image setting values to the same image on a plurality of areas, the controller 290 may control the image processor 220 and the display 260 to magnify and display an image displayed on the selected area. For example, as illustrated in FIG. 5, if the second image 520 is selected while four images 510, 520, 530, 540 are displayed on four areas, the controller 290 may control the display 260 to magnify and display the second image 520 corresponding to the displayed dynamic mode on the second area.

As described above, the display apparatus 200 allows a user to check a plurality of images where different image setting values are applied simultaneously so as to view the image where the image setting value is changed as well.

Meanwhile, in the above exemplary embodiment, a menu for changing an image setting is generated according to a predetermined user command, and if one of items on the menu is selected, a plurality of images are displayed on a plurality of areas, but this is only an example. If a predetermined user command is input, a plurality of images may be displayed on a plurality of areas immediately. For example, if a predetermined user command is input, the controller 290 may not generate the menu 410 as illustrated in FIG. 4 and instead, may divide a display screen into two areas and display a previous screen 810 and a newly-set screen 820 on each of the two areas. In this case, the controller 290 may display the image setting value(s) 830 applied to the previous image below a previous screen 810 and the image setting value(s) 840 to be newly-applied to the image below a screen 820, which will be newly-set. In addition, the controller 290 may display an item to be adjusted according to a user input distinctively from other items (for example, in a square).

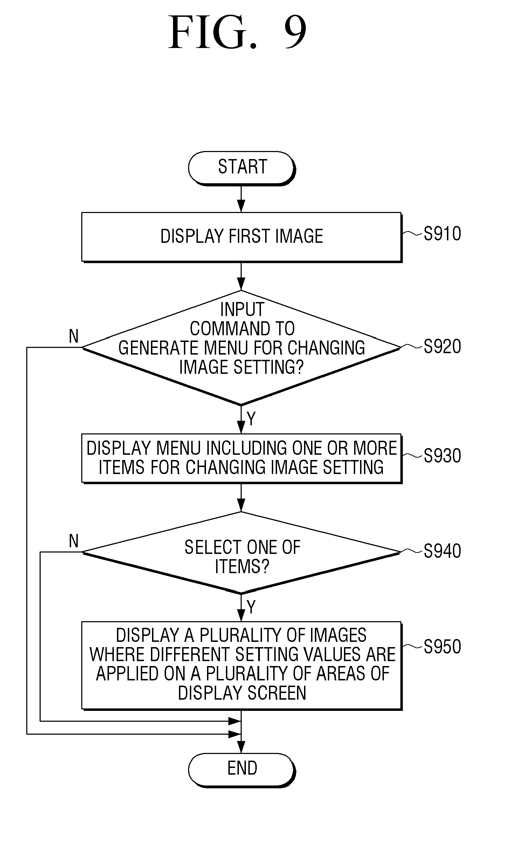

Hereinafter, the method for controlling the display apparatus 100 will be explained in greater detail with reference to FIG. 9.

First of all, the display apparatus 100 displays the first image on the display screen (S910).

The display apparatus 100 determines whether a command to generate a menu for changing an image setting is input (S920). In this case, the command to generate a menu for changing an image setting may be a command to select a predetermined button on a remote controller.

If the command to generate a menu for changing an image setting is input (S920-Y), the display apparatus 100 generates and displays a menu including one or more items for changing an image setting on the display screen (S930). In this case, one or more items for changing an image setting may include an item for changing an image mode, an item for improving image quality (for example, an outline highlighting function and a motion lighting function), and an item for changing an image setting value (for example, a brightness adjustment item, a contrast ratio adjustment item, and so on).

Subsequently, the display apparatus 100 determines whether one of one or more items included in the menu is selected (S940).

If one of one or more items is selected (S940-Y), the display apparatus 100 displays a plurality of images which are generated by applying different image setting values to the first image on a plurality of areas of the display screen (S950). The method of the display apparatus 100 displaying a plurality of images which are generated by applying different image setting values on a plurality of areas is the same as explained above with reference to FIGS. 5 to 7. If one of a plurality of areas is selected, the display apparatus 100 may magnify and display an image displayed on the selected area.

As described above, the method for controlling the display apparatus 100 allows a user to compare the previously-displayed image with the image where a new image setting value is applied on one screen so that the user may check the change of the display screen due to the change of the image setting intuitively.

In addition, the method for controlling a display apparatus according to various exemplary embodiments may be realized as a program and provided in a display apparatus.

Specifically, a non-transitory computer readable medium which stores a program including the first displaying of displaying the first image on a display screen, the second displaying of generating a menu including one or more items for changing an image setting and displaying the menu on the display screen, and the third displaying of, if one of one or more items included in the menu is selected, dividing the display screen into a plurality of areas and displaying a plurality of images which are generated by applying different image setting values to the first image on each of the plurality of areas may be provided.

Herein, the non-transitory recordable medium refers to a medium which may store data semi-permanently rather than storing data for a short time such as a register, a cache, and a memory and may be readable by an apparatus. Specifically, the above-mentioned various applications or programs may be stored in a non-temporal recordable medium such as CD, DVD, hard disk, Blu-ray disk, USB, memory card, and ROM and provided therein.

The foregoing exemplary embodiments and advantages are merely exemplary and are not to be construed as limiting. The present teachings can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method for controlling a display apparatus, comprising:
displaying of displaying a first image on a display screen;
in response to a command to generate a menu, generating a menu including one or more items for changing an image setting and displaying the menu on the display screen; and
in response to one of the one or more items included in the menu being selected, displaying a plurality of images that are generated by applying different image setting values to the first image on a plurality of areas of the display screen.

2. The method as claimed in claim 1, wherein the displaying the plurality images comprises, in response to an item to change an image mode being selected from among the one or more items included in the menu, dividing the display screen into the plurality of areas corresponding to a number of image modes, and displaying the plurality of images which are generated by applying different image modes to the first image on each of the plurality of areas.

3. The method as claimed in claim 2, wherein each of the plurality of areas include information indicating an image mode being applied to an image displayed on a corresponding area.

4. The method as claimed in one of claim 1 to claim 3, wherein the displaying the plurality of images comprises, in response to an image setting item for improving image quality being selected from among the one or more items included in the menu, dividing the display screen into two areas and displaying the first image in one of the areas and a second image in the other one of the areas, the second image being generated by applying the image quality improvement function to the first image.

5. The method as claimed in claim 4, wherein the displaying the plurality of images further comprises displaying a description regarding the image quality improvement function on the display screen.

6. The method as claimed in one of claim 1 to claim 3, wherein the displaying the plurality of images comprises, in response to an image setting item for changing an image setting value being selected from among the one or more items included in the menu, dividing the display screen into two areas and displaying the first image in one of the areas and a third image in the other one of the areas, the third image being generated by applying a target image setting value to the first image, and in response to an image setting value being changed by a user input, displaying an image by applying the changed image setting value to the third image.

7. The method as claimed in claim 6, wherein the displaying the plurality of images further comprises displaying an image setting value applied to the first image around the first image and displaying an image setting value applied to the third image around the third image.

8. The method as claimed in one of claim 1 to claim 7, further comprising:
in response to one of the plurality of areas being selected by a user input, magnifying an image displayed on the selected area and displaying the magnified image on the display screen.

9. A display apparatus, comprising:
an image input unit which receives an image;
an image processor which processes the input image;
a display which displays a first image, the first image being image-processed by the image processor;
an input unit which receives a user command; and
a controller which, in response to a command to generate a menu for changing an image setting being input through the input unit, controls the image processor and the display to generate and display a menu including one or more items for changing an image setting on the display, and in response to one of the one or more items included in the menu being selected through the input unit, to display a plurality of images which are generated by applying different image setting values on a plurality of areas of the display.

10. The apparatus as claimed in claim 9, wherein, in response to an item to change an image mode being selected from among the one or more items included in the menu, the controller controls the image processor and the display to divide the display screen into a plurality of areas corresponding to a number of image modes and display a plurality of images which are generated by applying different image modes to the first image on each of the plurality of areas.

11. The apparatus as claimed in claim 10, wherein the controller controls the display to display information indicating an image mode applied to an image displayed on a corresponding area of each of the plurality of areas.

12. The apparatus as claimed in one of claim 9 to claim 11, wherein the controller, in response to an image setting item for improving image quality being selected from among the one or more items included in the menu, controls the image processor and the display to divide the display screen into two areas and display the first image in one of the areas and a second image in the other one of the areas, the second image being generated by applying the image quality improvement function to the first image.

13. The apparatus as claimed in claim 12, wherein the controller controls the display to display a description regarding the image quality improvement function on the display screen.

14. The apparatus as claimed in one of claim 9 to claim 11, wherein the controller, in response to an image setting item for changing an image setting value being selected from among the one or more items included in the menu, controls the image processor and the display to divide the display screen into two areas and display the first image in one of the areas and a third image in the other one of the areas, the third image being generated by applying a target image setting value to the first image, and in response to an image setting value being changed through the input unit, display an image by applying the changed image setting value to the third image.

15. The apparatus as claimed in claim 14, wherein the controller controls the display to display an image setting value applied to the first image around the first image and display an image setting value applied to the third image around the third image.
